# EUROPEAN PATENT SPECIFICATION

(11) **EP 2 124 585 B1**
(45) Date of publication and mention of the grant of the patent: **13.10.2010**
(21) Application number: 08717168.2
(22) Date of filing: 27.02.2008
(51) Int. Cl.: A23C 9/123, A23C 9/13, A23C 9/133, A23C 9/152, A23C 9/156, A23L 1/30

(54) **METHOD OF MANUFACTURING AN EDIBLE PRODUCT COMPRISING FRUIT,OMEGA-3 POLYUNSATURATED FATTY ACIDS AND IRON**
VERFAHREN ZUR HERSTELLUNG EINES ESSBAREN PRODUKTS MIT FRÜCHTEN, MEHRFACH UNGESÄTTIGTEN OMEGA-3-FETTSÄUREN UND EISEN
PROCEDE DE FABRICATION D'UN PRODUIT COMESTIBLE COMPOSE DE FRUITS ET D'ACIDES GRAS POLYINSATURES SOUS FORME D'OMEGA-3 ET DE FER

(30) Priority: 20.03.2007 EP 07104478
(43) Date of publication of application: 02.12.2009
(73) Proprietor: Unilever N.V., 3013 AL Rotterdam (NL); Unilever PLC, London EC4Y 0DY (GB)
(72) Inventor: AVRAMIS, Constantina, Avramopoulou, NL-3133 AT Vlaardingen (NL); JACOBS, Barbara, NL-3133 AT Vlaardingen (NL)
(74) Representative: Corsten, Michael Allan
(86) International application number: PCT/EP2008/052361
(87) International publication number: WO 2008/113663

(56) References cited:
- EP-A- 0 809 939
- EP-A- 1 523 891
- WO-A-89/02223
- WO-A-2006/114840
- JP-A- 2002 204 656

## Description

### TECHNICAL FIELD OF THE INVENTION

The present invention relates a method of manufacturing edible products, such as drinks, spreads and desserts. In particular, the invention relates to a method of manufacturing microbiologically stable edible products containing fruit and a source of omega-3 polyunsaturated fatty acids (ω-3 PUFA), such as fish-oil, and a source of iron.

### BACKGROUND OF THE INVENTION

Many scientific publications have been issued that strongly suggest that regular consumption of significant amounts of polyunsaturated fatty acids can deliver important health benefits. In recent years, ω-3 polyunsaturated fatty acids have gained particular attention. Hence, many efforts have been made by the industry to develop food products and nutritional preparations that contain appreciable amounts of omega-3 polyunsaturated fatty acids.

Edible products containing fish-oil often develop a fishy odour during storage. This off-flavour problem is associated with the oxidation of the unsaturated fatty acids contained in the fish oil, notably the ω-3 PUFA. Oxidation of these unsaturated fatty acids is accompanied by the formation of volatile, potent flavour molecules, such as unsaturated aldehydes. Flavour attributes associated with oxidation products of unsaturated fatty acids include "cardboard", "paint", "oily", "rancid", "metallic" and "fish". A fishy off-flavour note typically results from oxidation of ω-3 PUFA and is regarded as particularly objectionable in dairy products.

Attempts have been made in the prior art to prevent off-flavour problems associated with the incorporation of fish oil in dairy products. EP 809 939, for instance, discloses a yogurt product containing refined fish oil, wherein the yogurt contains specific sweeteners and is packed in an oxygen blocking hermetic package in order to prevent the development of a fishy smell.

Other product formats with fish-oil have also been proposed. WO 04/014151 discloses the combined use of encapsulated fish oil and citrus flavour in cereal based food products.

WO 02/094035 discloses frozen desserts, which may optionally be fortified with fat. Examples of suitable supplemental fats include fish-oil.

Iron is an essential trace element in animal and human nutrition. It is a component of heme in hemoglobin and of myoglobin, cytochromes and several enzymes. The main role of iron is its participation in the transport, storage and utilization of oxygen. Iron deficiency can cause a broad spectrum of biochemical abnormalities.

Iron deficiency was and remains a common nutritional problem not only in the developing world but also in the industrialized countries. Inadequate intake of dietary iron causes the high incidence of anemia which nutritional surveys have identified among children, adolescents and women. Furthermore there is increasingly convincing evidence to suggest that iron deficiency impairs psychomotor development and cognitive function.

Since the human body does not produce minerals, it is totally dependent on an external supply of iron, either nutritional or supplementary. The importance of adequate iron intake is recognized during the whole life of the human being. The recommended daily allowance for iron intake is from 10 to 20 mg per day, and is dependent on age and sex. Children, women up to the time of menopause, and expectant and nursing mothers are in the group with higher requirements of iron.

However, we have found that inclusion of an iron component in liquid products can have the drawback that they can result in storage instability of the product due to adverse interactions with oxidisable oil contained within the same liquid product, notably an oil containing polyunsaturated fatty acids. The oxidation of polyunsaturated fatty acids in a liquid product is greatly accelerated by the presence of an iron component and is accompanied by the generation of objectionable off-flavours.

It was the objective of the inventors to provide a microbiologically stable edible product containing fruit and ω-3 PUFA and iron that can easily be manufactured and that does not develop an objectionable off-flavour when stored in a refrigerator for up to several weeks.

### SUMMARY OF THE INVENTION

It was found that the aforementioned objective can be realised by employing a manufacturing process in which a source of ω-3 PUFA is pre-mixed with a fruit component, following which this pre-mix is added to a previously pasteurised or sterilised protein base (e.g. yogurt or milk) containing iron. In order to ensure that the resulting edible product is microbiologically stable, both the protein base and the fruit component are subjected to a pasteurising or sterilising heat treatment. The fruit component is pasteurised or sterilised before it is combined with the source of ω-3 PUFA or, alternatively, the pre-mix of ω-3 PUFA and fruit component is pasteurised or sterilised before it is combined with the protein base.

Unexpectedly, it was found that whereas pasteurisation or sterilisation of a protein base containing added ω-3 PUFA resulted in the immediate development of a pronounced fishy off-flavour, pasteurisation or sterilisation of a pre-mix of ω-3 PUFA and a fruit component did not produce significant off-flavour. Furthermore, off-flavour formation can be avoided by pre-mixing the ω-3 PUFA with a previously pasteurised or sterilised fruit component. Thus, in accordance with the present invention a microbiologically stable edible product is produced by:
- providing a pasteurised or sterilised protein composition containing protein and at least 50 wt% of water and at least 0.001 wt% of iron;
- forming a pre-mix by (i) combining an oil containing ω-3 PUFA with a pasteurised or sterilised aqueous fruit composition or (ii) combining the oil with an aqueous fruit composition, followed by pasteurisation or sterilisation; and
- adding the premix to the pasteurised or sterilised protein composition.

According to a particularly preferred embodiment, in the present process, viable probiotic micro-organisms are incorporated into the microbiologically stable protein composition, preferably by inoculating the pasteurised or sterilised protein composition with a probiotic micro-organism and fermenting said protein composition until it contains at least 1.0 X 10⁷/ml viable probiotic micro-organisms. The pre-mix is suitably added after fermentation, following which the product is packaged.

The incorporation of bacteria in food products, and in particular dairy products, has been described in the literature. For instance EP-A 0 111 020 describes the use of a specific combination of bacteria to produce a thick fermented milk product. EP-A 0 082 581 describes fermented milk products, e.g. yoghurt, comprising specific lactic acid bacteria, interconnected by threads of biopolymers.

### DETAILED DESCRIPTION OF THE INVENTION

Accordingly, the present invention relates to a process for the preparation of a microbiologically stable edible product comprising:
(a) from 0.1 to 12 wt% of protein;
(b) from 0.01 to 50 wt% of fruit solids;
(c) from 0.05 to 30 wt% of non-encapsulated oil containing at least 0.01 % of ω3-polyunsaturated fatty acids by weight of the edible product;
(d) at least 60 wt%, preferably at least 70 wt%, of water; and
(e) from 0.001 to 0.025 wt% of iron
said process comprising:
(1) providing a pasteurised or sterilised protein composition containing the protein and the iron and at least 50 wt%, preferably at least 60 wt% of water;
(2) forming a pre-mix by (i) combining the oil with a pasteurised or sterilised aqueous fruit composition containing the fruit solids or (ii) combining the oil with an aqueous fruit composition containing the fruit solids, followed by pasteurisation or sterilisation; and
(3) adding the premix to the pasteurised or sterilised protein composition.

Suitable iron salts are selected from the group consisting of iron pyrophosphate, iron orthophosphate, iron fumarate, iron EDTA, iron sulphate, iron glycinate, iron sorbate. Preferred iron salt are iron fumarate and iron pyrophosphate. Preferably the oxidation state of the iron is Fe(III), i.e. ferric salts.

The amount of iron is calculated on iron ion. This entails that for different kinds of iron salts different amounts are needed. The preferred amount of iron to be consumed is 10 to 20 mg/day. For compositions of the present invention at least 1 mg of iron per 100g serving is present, i.e. 0.001 wt% of iron. Preferably 1 mg to 25 mg iron per 100g serving (0.001 wt%-0.025 wt%) is present, more preferably 1.5 to 12 mg iron per 100g serving (0.0015-0.012 wt%), most preferably 3 to 6 mg iron per 100g serving (0.003-0.006 wt%) .

The term "microbiologically stable product" as used herein refers to a product that can be stored for at least 20 days under refrigerated conditions without developing unacceptable growth of undesirable, notably pathogenic micro-organisms.

The term "fruit solids" as used herein refers to the dry matter contained in any fruit material that is incorporated in the edible product.

Typical examples of edible products that can advantageously be produced with the present process include drinks, spreads and desserts. Preferably, the edible product is a drink or a spread. Most preferably, the edible product is a drink.

In principle, any type of edible protein can be used in the preparation of the present edible product. Preferably, the protein employed is selected from the group consisting of milk protein, soy protein and combinations thereof. According to a preferred embodiment, the edible product contains at least 0.3 wt%, more preferably at least 1 wt% of protein. Typically, the amount of protein does not exceed 12 wt%.

The protein composition that is employed in the present process is preferably selected from the group consisting of milk, soy milk, buttermilk, yogurt, quark, cream, whey and combinations thereof. It is noted that the terms milk, buttermilk, yogurt and quark encompass full-fat versions of these products as well as reduced fat or even fat-free versions. Furthermore, it is noted that, for instance, milk may be produced from by reconstituting milk powder with milk. The present invention also encompasses the use of the aforementioned protein compositions in reconstituted form. The advantages of the invention are particularly appreciated in case the protein composition is a dairy composition, especially a diary composition selected from the group consisting of milk, yogurt, whey and combinations thereof.

In the present process, the protein composition is advantageously incorporated in the final edible product in a concentration from 50 to 97.9 wt%, more preferably from 60 to 90 wt%, most preferably from 65 to 85 wt%.

In accordance with a preferred embodiment of the present process, the protein composition contains a limited amount of milk fat. Typically, the protein composition contains less then 3 wt% of milk fat, preferably from 0.05-2 wt% of milk fat.

According to a preferred embodiment, the fruit solids originate from one or more of the following fruit sources: citrus fruit (e.g. orange, tangarine, lemon or grapefruit); tropical fruit (e.g. banana, peach, mango, apricot or passion fruit); red fruit (e.g. strawberry, cherry, raspberry or blackberry), or any combination thereof.

According to a further preferred embodiment, fruits are used with a relatively high pectin content, such as citrus fruits. Advantageously, the fruit solids employed in the present process comprise at least 0.001%, more preferably at least 0.01% and most preferably at least 0.1% of fruit pectin by weight of the edible product. Typically, the amount of fruit pectin does not exceed 3% by weight of the edible product.

The fruit solids can be incorporated in the present edible product in any suitable form, for example, as intact fruit, as fruit puree, as fruit juice, as comminuted fruit, as fruit chunks or as a blend of these fruit products. Preferably the fruit is added in fluid form e.g. as a juice or a puree having a viscosity expressed in Bostwick consistometer values of between 5 and 20 cm. at 20°C.

Optionally, the aqueous fruit composition containing the fruit solids comprises gelling agents or thickeners in an amount sufficient to bring the viscosity of the fruit composition within the above mentioned preferred range. Examples of suitable viscosity enhancing agents are alginates, gelatine, starch, agar, xanthan or pectin. Preferably the level of thickeners is from 0.01 to 3 wt% based on the weight of the aqueous fruit composition. Most preferably, the aqueous fruit composition contains from 0.01 to 3 wt% of pectin. The pectin in the fruit composition may originate from the fruit solids contained therein or it may have been incorporated separately.

Preferably, the aqueous fruit composition that is employed in the present process contains not more than trace amounts of dissolved iron and copper ions. Preferably the amount of dissolved copper ions in the fruit composition does not exceed 2 mg/kg, more preferably it does not exceed 0.25 mg/kg. Likewise the amount of dissolved iron ions preferably does not exceed 10 mg/kg, more preferably it does not exceed 2.5 mg/kg. By ensuring that the levels of dissolved copper and/or iron ions contained in the aqueous fruit composition are low, oxidation of the ω-3 PUFA, especially during pasteurisation or sterilisation, is prevented effectively. The amount of dissolved metal ions in the aqueous fruit composition may advantageously be reduced through incorporation of a suitable complexing agent, e.g. EDTA.

The amount of fruit used in the present process preferably is within the range 1-10%, more preferably within the range of 4-8% and most preferably within the range of 2-5%, by weight of the edible product. The aforementioned percentages refer to the equivalent amount of fruit that is incorporated in non-diluted, non-concentrated form. Thus, if 0.5 wt% of a 10-fold fruit concentrate is used, the amount of fruit incorporated is 5 wt%.

The non-encapsulated oil employed in the present process advantageously comprises at least 0.01%, preferably at least 0.05% by weight of the edible product of an ω-3 oil selected from the group consisting of fish oil, algae oil, linseed oil, soybean oil, rapeseed oil and combinations thereof. These ω-3 oils contain appreciable levels of α-linolenic acid (ALA), eicosapentaenoic acid (EPA) and/or docosahexaenoic acid (DHA). In the scientific literature many health benefits have been attributed to the latter ω-3 polyunsaturated fatty acids.

According to a particularly preferred embodiment, at least 2%, preferably at least 5%, more preferably at least 10% and most preferably at least 20% of polyunsaturated acids selected from the group consisting of α-linolenic acid (ALA), eicosapentaenoic acid (EPA), docosahexaenoic acid (DHA) and combinations thereof are incorporated into the edible product by weight of the total amount of fatty acids contained in the non-encapsulated oil. EPA and DHA are particularly sensitive to oxidation and produce pronounced fishy off-flavours. Hence, in a particularly advantageous embodiment, at least 2%, preferably at least 5%, more preferably at least 10% and most preferably at least 20% of polyunsaturated acids selected from the group consisting of EPA, DHA and combinations thereof are incorporated into the edible product by weight of the total amount of fatty acids contained in the non-encapsulated oil. The total amount of fatty acids includes fatty acid residues as well as free fatty acids.

In a particularly advantageous embodiment, the present process comprises the incorporation of the non-encapsulated oil at a level of 0.05-15, preferably 0.05-5%, more preferably 0.1-2%, still more preferably from 0.2-1.5% and most preferably from 0.3-1% by weight of the final edible product. Omega-3 PUFA can suitably be obtained, for example, from salmon, tuna, mackerel, cod liver, algae, linseed, rapeseed and soybean.

In a further preferred embodiment, the present process employs a protein composition that delivers not more than a limited amount of milk fat into the edible product. Accordingly, the edible product advantageously comprises less than 5 wt%, more preferably less than 2 wt% of milk fat.

As mentioned herein before, in order to provide a microbiologically stable edible product, it is critical that both the protein composition and the fruit composition have been pasteurised or sterilised. According to a particularly advantageous embodiment, the pre-mix containing the fruit composition and the oil is pasteurised prior to being added to the pasteurised or sterilised protein composition. It is surprising that, despite the fact that the heat treatment needed for pasteurisation favours oxidation of the ω-3 PUFA, a bland tasting edible product can be produced by a process that involves pasteurisation of a premix containing a blend of ω-3 PUFA and an aqueous fruit composition.

In the present process the edible product may be supplemented with various optional ingredients, for example flavouring ingredients, antioxidants, thickeners, emulsifiers, salt, colouring agents, added proteins etc. Also possible is the addition of further beneficial agents such as fibres, (phyto) sterols and stanols, peptides, fortificants such as vitamins and minerals (e.g. iron and zinc) and probiotics or combinations thereof. The levels of these ingredients may vary in a broad range for example for each of these ingredients up to 15 wt%. In accordance with the invention, pasteurisation is preferably carried out at a temperature of above 60°C, preferably 65-100°C, more preferably 70-80°C, most preferably 75-80°C. Preferably the duration of the pasteurisation heat treatment is from 1 second to 10 minutes, for example from 1 to 6 minutes.

According to a particularly advantageous embodiment of the present process, viable probiotic micro-organisms are incorporated into the edible product. The inclusion of probiotic micro-organisms further enhances the nutritional value of the edible product.

The probiotic micro-organisms may be introduced into the diary product, following which the product is packaged without allowing sufficient time for the micro-organisms to propagate. According to a preferred embodiment, however, the pasteurised or sterilised protein composition is inoculated with viable probiotic micro-organisms and fermented until it contains at least 5.0 x 10⁷/ml, more preferably at least 5.0 x 10⁸/ml, most preferably at least 5.0 x 10⁹/ml viable probiotic micro-organisms. Following fermentation, the fermented diary product is suitably packaged in a sealed container. In a very preferred embodiment, following the addition of the pasteurised or sterilised premix to the pasteurised or sterilised aqueous liquid, the product is packaged, said packaged product containing at least 5.0 x 10⁷/ml, more preferably at least 5.0 x 10⁸/ml, most preferably at least 5.0 x 10⁹/ml viable probiotic micro-organisms.

Preferably, the probiotic micro-organism employed in the present process is selected from the group consisting of *Bifidobacterium, Lactobacillus, Bacteroides, Streptococcus, Saccharomyces* and combinations thereof. More preferably, the probiotic micro-organism is selected from the group consisting of *Bifidobacterium, Lactobacillus* and combinations thereof. Even more preferably, the micro-organism is selected form the group consisting of *Bifidobacterium lactis, Bifidus essensis, Lactobacillus acidophilus, Lactobacillus casei, Lactobacillus paracasei, Lactobacillus rhamnosus* and combinations thereof.

The amount and type of starter culture that is used to inoculate the protein composition can vary. Preferably, the fermentation is accompanied by a pH decrease of at 1.0 point. Typically, fermentation is allowed to proceed until the edible product has reached a pH 4.0 to 5.0, more preferably of 4.2 to 4.8.

It can be beneficial to subject the edible product to a homogenisation step prior to packaging, e.g. by passage thorough a homogeniser. Homogenisation can be applied while the product is at elevated temperature. Preferably homogenisation takes place in a homogeniser operating at, for example, a pressure of at least 20 bar, preferably 30-500 bar, particularly 40-300 bar.

The edible product obtained from the present process is usually hot or cold filled into moulds or packages, allowed to cool down and stored at chill temperatures.

The invention is further illustrated by means of the following examples.

### EXAMPLES

### Example 1

A yogurt drink was made of the following composition:

| Ingredient | Parts by weight |
|---|---|
| Skimmed milk | 76 |
| Skimmed milk powder | 0.3 |
| Sucrose | 5 |
| Water | 13.37 |
| Yoghurt cultures *Lactobacillus sp.* and *Streptococcus sp.* | 0.01 |
| Fruit puree | 5 |
| Fish oil | 0.3 |
| Ferric pyrophosphate | 0.02 |

The method of preparation was as follows: the milk and water were mixed at 300 rpm to form a first pre-mix and heated to 60 °C. The sugar, skimmed milk powder and ferric pyrophosphate were added followed by further mixing at 3000 rpm.

A second pre-mix of the fruit puree and the oil was made by mixing these ingredients at ambient temperature followed by pasteurisation at 75 °C for 5 minutes. This premix was added to the product and mixed at 300rpm. The resulting pre-mix was kept at 75 °C for 5 minutes. Then the mix was homogenised at 200bar.

The mix was inoculated with the above mentioned yoghurt cultures, mixed under low speed and fermented for approximately 4 hours at 43 °C to obtain a pH of 4.3.

Next the fermented product was homogenised at 50 bar to form the final product. The product was then filled and sealed in sterile glass jars.

The glass jars were stored for 4 weeks at 5°C and subsequently opened and tasted. No perceivable fish taste or fish smell was observed.

### Comparative Example A

A yogurt drink was made using the same formulation as in Example 1.

The method of preparation was as follows: the milk and water were mixed at 300 rpm to form a first pre-mix and heated to 60 °C. The sugar and skimmed milk powder were added followed by further mixing at 3000 rpm. The resulting pre-mix was kept at 75 °C for 5 minutes. Then the mix was homogenised at 200bar.

A second pre-mix of the fruit puree, the oil and the ferric pyrophosphate was made by mixing these ingredients at ambient temperature followed by pasteurisation at 75 °C for 5 minutes.

The first pre-mix was inoculated with the above mentioned yoghurt cultures, mixed under low speed and fermented for approximately 4 hours at 43 °C to obtain a pH of 4.3. The fermented product was homogenised at 50 bar.

Next, the second pasteurized pre-mix was added to the fermented product to form the final product. The product was then filled and sealed in sterile glass jars.

The glass jars were stored at 5 °C and subsequently opened and tasted. A fish taste or fish smell was observed after 7-21 days.

## Claims

1. A process for the preparation of a microbiologically stable edible product comprising:
(a) from 0.1 to 12 wt% of protein;
(b) from 0.01 to 50 wt% of fruit solids;
(c) from 0.05 to 30 wt% of non-encapsulated oil containing at least 0.01 % of ω3-polyunsaturated fatty acids by weight of the edible product;
(d) at least 60 wt% of water; and
(e) from 0.001 wt% to 0.025 wt% of iron
said process comprising:
(1) providing a pasteurised or sterilised protein composition containing the protein and the iron and at least 50 wt% of water;
(2) forming a pre-mix by (i) combining the oil with a pasteurised or sterilised aqueous fruit composition containing the fruit solids or (ii) combining the oil with an aqueous fruit composition containing the fruit solids, followed by pasteurisation or sterilisation; and
(3) adding the premix to the pasteurised or sterilised protein composition.

2. Process according to claim 1 wherein the iron is selected from the group consisting of iron pyrophosphate, iron orthophosphate, iron fumarate, iron EDTA, iron sulphate, iron glycinate, iron sorbate.

3. Process according to claim 1 or 2, wherein the protein is selected from the group consisting of milk protein, soy protein and combinations thereof.

4. Process according to any of the preceding claims, wherein the protein composition is selected from the group consisting of milk, soy milk, buttermilk, yogurt, quark, whey, cream and combinations thereof.

5. Process according to any of the preceding claims, wherein the protein composition contains less then 3 wt% of milk fat.

6. Process according to any one of the preceding claims, wherein the fruit solids comprise at least 0.001% of fruit pectin by weight of the edible product.

7. Process according to any one of the preceding claims, wherein the fruit solids originate from citrus fruit, tropical fruit, red fruit or combinations of these fruits.

8. Process according to any one of the preceding claims, wherein the non-encapsulated oil comprises at least 0.01% by weight of the edible product of an ω-3 oil selected from the group consisting of fish oil, algae oil, linseed oil, soybean oil, rapeseed oil and combinations thereof.

9. Process according to any one of the preceding claims, wherein the edible product comprises less than 5 wt% of milk fat.

10. Process according to any one of the preceding claims, wherein the pre-mix is pasteurised prior to being added to the pasteurised or sterilised protein composition.

11. Process according to any one of the preceding claims, wherein viable probiotic micro-organisms are incorporated into the edible product.

12. Process according to claim 11, wherein the pasteurised or sterilised protein composition is inoculated with viable probiotic micro-organisms and fermented until it contains at least 10⁷/ml viable probiotic micro-organisms.

13. Process according to claim 12, wherein, following the addition of the pasteurised or sterilised premix to the pasteurised or sterilised aqueous liquid, the product is packaged, said packaged product containing at least 5.0x10⁷/ml viable probiotic micro-organisms.

## Patentansprüche

1. Verfahren für die Herstellung eines mikrobiologisch stabilen essbaren Produkts, umfassend:
(a) 0,1 bis 12 Gewichts-% Protein;
(b) 0,01 bis 50 Gewichts-% Fruchtfeststoffe;
(c) 0,05 bis 30 Gewichts-% nicht-eingekapseltes Öl, das wenigstens 0,01 % ω3-mehrfach ungesättigte Fettsäuren, bezogen auf das Gewicht des essbaren Produkts, enthält;
(d) wenigstens 60 Gewichts-% Wasser und
(e) 0,001 Gewichts-% bis 0,025 Gewichts-% Eisen,
wobei das Verfahren umfasst:
(1) Bereitstellen einer pasteurisierten oder sterilisierten Proteinzusammensetzung, die das Protein und das Eisen und wenigstens 50 Gewichts-% Wasser enthält;
(2) Bilden einer Vormischung durch (i) Kombinieren des Öls mit einer pasteurisierten oder sterilisierten wässrigen Fruchtzusammensetzung, die die Fruchtfeststoffe enthält, oder (ii) Kombinieren des Öls mit einer wässrigen Fruchtzusammensetzung, die die Fruchtfeststoffe enthält, gefolgt von einer Pasteurisierung oder Sterilisierung, und
(3) Zusetzen der Vormischung zu der pasteurisierten oder sterilisierten Proteinzusammensetzung.

2. Verfahren nach Anspruch 1, wobei das Eisen aus der Gruppe, bestehend aus Eisenpyrophosphat, Eisenorthophosphat, Eisenfumarat, Eisen-EDTA, Eisensulfat, Eisenglycinat, Eisensorbat, ausgewählt wird.

3. Verfahren nach Anspruch 1 oder 2, wobei das Protein aus der Gruppe, bestehend aus Milchprotein, Sojaprotein und Kombinationen davon, ausgewählt wird.

4. Verfahren nach einem der vorangehenden Ansprüche, wobei die Proteinzusammensetzung aus der Gruppe, bestehend aus Milch, Sojamilch, Buttermilch, Jogurt, Quark, Molke, Sahne und Kombinationen davon, ausgewählt wird.

5. Verfahren nach einem der vorangehenden Ansprüche, wobei die Proteinzusammensetzung weniger als 3 Gewichts-% Milchfett enthält.

6. Verfahren nach einem der vorangehenden Ansprüche, wobei die Fruchtfeststoffe wenigstens 0,001 % Fruchtpektin, bezogen auf das Gewicht des essbaren Produkts, umfassen.

7. Verfahren nach einem der vorangehenden Ansprüche, wobei die Fruchtfeststoffe von Zitrusfrüchten, tropischen Früchten, roten Früchten oder Kombinationen dieser Früchte stammen.

8. Verfahren nach einem der vorangehenden Ansprüche, wobei das nichteingekapselte Öl wenigstens 0,01 Gewichts-%, bezogen auf das essbare Produkt, eines ω3-Öls umfasst, das ausgewählt ist aus der Gruppe, bestehend aus Fischöl, Algenöl, Leinsamenöl, Sojabohnenöl, Rapssamenöl und Kombinationen davon.

9. Verfahren nach einem der vorangehenden Ansprüche, wobei das essbare Produkt weniger als 5 Gewichts-% Milchfett umfasst.

10. Verfahren nach einem der vorangehenden Ansprüche, wobei die Vormischung pasteurisiert wird, bevor sie zu der pasteurisierten oder sterilisierten Proteinzusammensetzung gegeben wird.

11. Verfahren nach einem der vorangehenden Ansprüche, wobei die lebensfähigen probiotischen Mikroorganismen in das essbare Produkt eingearbeitet werden.

12. Verfahren nach Anspruch 11, wobei die pasteurisierte oder sterilisierte Proteinzusammensetzung mit lebensfähigen probiotischen Mikroorganismen inokuliert wird und fermentiert wird, bis sie wenigstens 10⁷/ml lebensfähige probiotische Mikroorganismen enthält.

13. Verfahren nach Anspruch 12, wobei das Produkt nach der Zugabe der pasteurisierten oder sterilisierten Vormischung zu der pasteurisierten oder sterilisierten wässrigen Flüssigkeit abgepackt wird, wobei das abgepackte Produkt wenigstens 5,0 x 10⁷ml lebensfähige probiotische Mikroorganismen enthält.

## Revendications

1. Procédé de préparation d'un produit comestible microbiologiquement stable, comprenant :
(a) de 0,1 à 12 % en poids de protéine ;
(b) de 0,01 à 50 % en poids de morceaux de fruit ;
(c) de 0,05 à 30 % en poids d'huile non encapsulée contenant au moins 0,01 % d'acides gras oméga 3 poly-insaturés en poids du produit comestible ;
(d) au moins 60 % en poids d'eau ; et
(e) de 0,001 % en poids à 0,025 % en poids de fer,
ledit procédé comprenant :
(1) la mise à disposition d'une composition protéique pasteurisée ou stérilisée contenant la protéine et le fer et au moins 50 % en poids d'eau ;
(2) la formation d'un prémélange (i) en combinant l'huile avec une composition aqueuse à base de fruit pasteurisée ou stérilisée contenant les morceaux de fruits ou (ii) en combinant l'huile avec une composition aqueuse à base de fruit contenant les morceaux de fruits, suivie d'une pasteurisation ou d'une stérilisation ; et
(3) l'addition du prémélange à la composition protéique pasteurisée ou stérilisée.

2. Procédé selon la revendication 1, dans lequel le fer est choisi dans le groupe comprenant le pyrophosphate de fer, l'orthophosphate de fer, le fumarate de fer, l'EDTA de fer, le sulfate de fer, le glycinate de fer, le sorbate de fer.

3. Procédé selon la revendication 1 ou 2, dans lequel la protéine est choisie dans le groupe comprenant des protéines de lait, des protéines de soja et leurs combinaisons.

4. Procédé selon l'une quelconque des revendications précédentes, dans lequel la composition protéique est choisie dans le groupe comprenant le lait, le lait de soja, le babeurre, le yogourt, le fromage blanc, le lactosérum, la crème et leurs combinaisons.

5. Procédé selon l'une quelconque des revendications précédentes, dans lequel la composition protéique contient moins de 3 % en poids de matières grasses du lait.

6. Procédé selon l'une quelconque des revendications précédentes, dans lequel les morceaux de fruits comprennent au moins 0,001 % de pectine de fruit, en poids du produit comestible.

7. Procédé selon l'une quelconque des revendications précédentes, dans lequel les morceaux de fruits proviennent d'agrumes, de fruits tropicaux, de fruits rouges ou de combinaisons de ces fruits.

8. Procédé selon l'une quelconque des revendications précédentes, dans lequel l'huile non encapsulée comprend au moins 0,01 % en poids du produit comestible d'une huile oméga 3 choisie dans le groupe comprenant l'huile de poisson, l'huile d'algue, l'huile de lin, l'huile de soja, l'huile de colza et leurs combinaisons.

9. Procédé selon l'une quelconque des revendications précédentes, dans lequel le produit comestible comprend moins de 5 % en poids de matières grasses du lait.

10. Procédé selon l'une quelconque des revendications précédentes, dans lequel le prémélange est pasteurisé avant d'être ajouté à la composition protéique pasteurisée ou stérilisée.

11. Procédé selon l'une quelconque des revendications précédentes, dans lequel des microorganismes probiotiques viables sont incorporés dans le produit comestible.

12. Procédé selon la revendication 11, dans lequel on inocule dans la composition protéique pasteurisée ou stérilisée des microorganismes probiotiques viables et la composition est fermentée jusqu'à contenir au moins 10⁷/ml microorganismes probiotiques viables.

13. Procédé selon la revendication 12, dans lequel, après l'addition du prémélange pasteurisé ou stérilisé dans le liquide aqueux pasteurisé ou stérilisé, le produit est conditionné, ledit produit conditionné contenant au moins 5,0 x 10⁷/ml de microorganismes probiotiques viables.
